# EUROPÄISCHE PATENTANMELDUNG

(11) **EP 0 988 911 A2**
(43) Veröffentlichungstag der Anmeldung: **29.03.2000**
(21) Anmeldenummer: 99114563.2
(22) Anmeldetag: 24.07.1999
(51) Int. Cl.: B23B 51/02, B25D 17/08

(54) **Bohrer für Hammerbohrmaschinen**

(30) Priorität: 11.09.1998 DE 19841593
(71) Anmelder: fischerwerke Artur Fischer GmbH & Co. KG, 72178 Waldachtal (DE)
(72) Erfinder: Gallatz, Armin, 72186 Empfingen (DE); Haug, Willi, 72250 Freudenstadt (DE); Saier, Walter, 72160 Horb-Grünmettstetten (DE)

(57) **Zusammenfassung**

Die Erfindung betrifft einen Bohrer zur Herstellung von Bohrlöchern in Hohlkammerbausteinen und Kalksandsteinen mit einem eine Bohreraufnahme (6) zum Einstecken in das Bohrfutter (7) einer Schlagbohrmaschine (8) aufweisenden Bohrschaft (2). Zwecks Erzielung einer gedämpften Schlagwirkung zur Vermeidung eines Ausbruchs der Stege der Hohlkammerbausteine wird vorgeschlagen, die Einspannlänge der Bohreraufnahme (6) des Bohrers (1) mindestens um den axialen Weg des Schlagbolzens (12) der Hammerbohrmaschine zu kürzen. Ferner ist im Abstand zum hinteren Stirnende (11) des Bohrers (1) auf der Bohreraufnahme (6) ein Gummiring (14) angeordnet, der den Bohrschaft (2) gegenüber dem Bohrfutter (7) abdichtet.

## Beschreibung

Die Erfindung betrifft einen Bohrer für Hammerbohrmaschinen zur Herstellung von Bohrlöchern in Hohlkammerbausteinen und Kalksandsteinen gemäß dem Oberbegriff des Anspruches 1.

Zum Bohren in Hohlkammerbausteinen werden üblicherweise die gleichen Bohrer wie für Beton und andere harte Baustoffe verwendet. Derartige Bohrer sind mit einer Stirn- und Seitensohneiden aufweisenden Bohrplatte aus Hartmetall ausgestattet, um den Verschleiß und die Abnutzung des Bohrers zu reduzieren. Beim Bohren mit einer Hammerbohrmaschine ist aufgrund der Schlagwirkung ein erheblich höherer Bohrfortschritt erzielbar. Allerdings entsteht beim Bohren in Hohlkammerbausteinen und Kalksandsteinen mit Schlagwirkung das Problem, daß die dünnen Querstege der sehr porösen Steine insbesondere an ihrer Rückseite ausbrechen. Aufgrund der sich dadurch ergebenden Schwächung der Stege weisen die in solchen Bohrlöchern eingesetzten und verankerten Spreizdübel zwangsläufig auch geringere Haltekräfte auf. Im Hinblick darauf wird üblicherweise empfohlen und in Dübelzulassungen für Hohlkammerbausteine vorgeschrieben, die Bohrlöcher im Drehgang und ohne Schlagwirkung herzustellen, was allerdings den Zeitaufwand für die Herstellung der Bohrlöcher erheblich erhöht.

Der Erfindung liegt die Aufgabe zugrunde, einen Bohrer zur Herstellung von Bohrlöchern in Hohlkammerbausteinen und Kalksandsteinen zu schaffen, mit dem bei hohem Bohrfortschritt ein Ausbrechen der Stege vermieden wird.

Die Lösung dieser Aufgabe wird durch die im Anspruch 1 angegebenen Merkmale erreicht. Durch die Verkürzung der Einspannlänge der Aufnahme des Bohrers in Verbindung mit einer Abdichtung am Bohrschaft, die diesen gegenüber dem Bohrfutter der Hammerbohrmaschine abdichtet, wird sichergestellt, daß der Schlagbolzen der Hammerbohrmaschine nicht direkt auf das hintere Stirnende des Bohrers schlägt. Der Schlagbolzen komprimiert lediglich beim Vorschnellen das zwischen dem hinteren Stirnende des Bohrers bzw. dem Dichtring und der Stirnseite des Schlagbolzens vorhandene Luftpolster, so daß die Schlagkraft vom Schlagbolzen auf den Bohrer durch den Druckaufbau übertragen wird. Die Schlagwirkung wird somit soweit gedämpft, daß nach wie vor ein sehr guter Bohrfortschritt erreicht, jedoch ein Ausbruch der Stege vermieden wird.

Um sicherzustellen, daß der Schlagbolzen beim Vorschnellen das hintere Stirnende des Bohrers nicht berührt, muß die Verkürzung der Einspannlänge der Aufnahme des Bohrers mindestens dem maximalen axialen Weg des Schlagbolzens entsprechen. Da dieser axiale Weg bei herkömmlichen Hammerbohrmaschinen unter 10 mm liegt, ist es zweckmäßig, die Einspannlänge der Aufnahme gegenüber handelsüblichen Hammerbohrern um ca. 10-20 mm zu verkürzen, wobei eine Verkürzung von 10 mm eine geringere und eine Verkürzung von 20 mm eine größere Dämpfung der Schlagkraft bewirkt.

Als Dichtung zwischen dem Bohrschaft und dem Bohrfutter kann ggf. schon eine enge Toleranz der Durchmesser von Bohrschaft und Bohrfutter ausreichen. Es ist jedoch vorteilhaft, als Dichtung einen Gummiring zu verwenden, der in einer umlaufenden Nut des Bohrschaftes in einem Abstand zum hinteren Stirnende des Bohrers angeordnet ist.

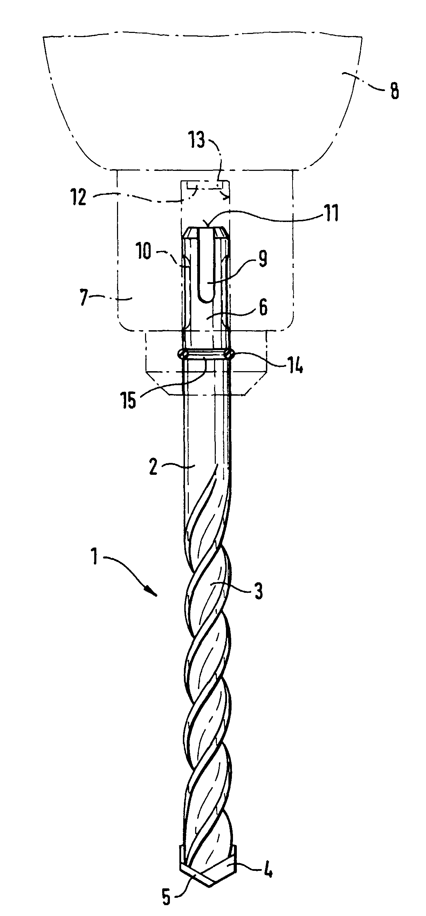

In der Zeichnung ist ein Ausführungsbeispiel der Erfindung dargestellt.

Der Bohrer 1 besteht aus einem Bohrschaft 2, der mit einer wendelförmig angeordneten Bohrmehlnut 3 ausgestattet ist. Am vorderen Ende des Bohrers 1 ist eine vorzugsweise aus Hartmetall bestehende Bohrplatte 4 angeordnet, die eine auf dem jeweilig zu bohrenden Baustoff abgestimmte Stirnschneide 5 aufweist.

Am hinteren Ende des Bohrers befindet sich die Bohreraufnahme 6, die in Anpassung an das Bohrfutter 7 einer Hammerbohrmaschine 8 (gestrichelt dargestellt) mit Mitnehmernuten 9, 10 ausgestattet ist.

Handelsübliche Hammerbohrer weisen eine Einspannlänge auf, die ein Aufsitzen der hinteren Stirnseite 11 auf dem gestrichelt dargestellten Schlagbolzen 12 ermöglicht. Bei dem erfindungsgemäßen Ausführungsbeispiel des Bohrers 1 ist die Einspannlänge um ein Maß verkürzt, das mindestens dem axialen Weg des Schlagbolzens bei eingeschaltetem Schlagwerk entspricht. Um dies sicherzustellen, beträgt die Kürzung ca. 10-20 mm. Damit entsteht zwischen der Stirnseite des Schlagbolzens 12 und dem hinteren Stirnende 11 des Bohrers 1 ein Abstand, der ein direktes Auftreffen des Schlagbolzens 12 auf das Stirnende 11 verhindert. Eine gedämpfte Schlagwirkung entsteht lediglich durch den Druckaufbau im Bohrfutter 7. Um einen solchen Druckaufbau insbesondere auch bei ungünstigen Toleranzverhältnissen zwischen dem Bohrschaft 2 und der Aufnahmebohrung 13 im Bohrfutter 7 sicherzustellen, ist in einem Abstand zum hinteren Stirnende 11 des Bohrers auf der Bohreraufnahme 6 ein Gummiring 14 als Dichtung angeordnet, der in einer umlaufenden Nut 15 des Schaftes eingesetzt ist. Zum Bohren von sehr porösen Hohlkammerbausteinen und Kalksandsteinen wird das Schlagwerk der Hammerbohrmaschine 8 eingeschaltet. Durch den Schlagbolzen 12 werden beim Bohren Druckstöße erzeugt, die eine gedämpfte Schlagwirkung erzeugen.

## Patentansprüche

1. Bohrer zur Herstellung von Bohrlöchern in Hohlkammerbausteinen und Kalksandsteinen mit einem eine Bohreraufnahme zum Einstecken in das Bohrfutter einer Hammerbohrmaschine aufweisenden Bohrschaft, **dadurch gekennzeichnet**, daß die Einspannlänge der Bohreraufnahme (6) des Bohrers (1) mindestens um den axialen Weg des Schlagbolzens (12) der Hammerbohrmaschine gekürzt ist, und daß in einem Abstand zum hinteren Stirnende (11) des Bohrers auf der Bohreraufnahme (6) eine Dichtung (14) angeordnet ist, die den Bohrschaft (2) gegenüber dem Bohrfutter (7) abdichtet.

2. Bohrer nach Anspruch 1, **dadurch gekennzeichnet**, daß die Verkürzung der Einspannlänge der Bohreraufnahme (6) ca. 10 - 20 mm beträgt.

3. Bohrer nach Anspruch 1, **dadurch gekennzeichnet**, daß die Dichtung (14) ein Gummiring ist, der in einer umlaufenden Nut (15) des Bohrschaftes (2) angeordnet ist.
